# FASCICULE DE BREVET EUROPEEN

(11) **EP 3 898 272 B1**
(45) Date de publication et mention de la délivrance du brevet: **01.05.2024**
(21) Numéro de dépôt: 19845769.9
(22) Date de dépôt: 17.12.2019
(51) Int. Cl.: B60C 5/14, B60C 9/08, B60C 13/00, B60C 9/02, B60C 9/14

(54) **MATERIAU DE RENFORT CONTRE LE FLUAGE DE LA GOMME INTERNE D'UN PNEUMATIQUE POUR VEHICULE LOURD DE TYPE GENIE CIVIL**
MATERIAL ZUR VERSTÄRKUNG GEGEN DAS KRIECHEN DES INNEREN GUMMIS EINES REIFENS FÜR EIN SCHWERES BAUFAHRZEUG
MATERIAL FOR REINFORCING AGAINST THE CREEP OF THE INNER RUBBER OF A TYRE FOR A HEAVY DUTY CIVIL ENGINEERING VEHICLE

(30) Priorité: 19.12.2018 FR 1873341; 29.01.2019 FR 1900772
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: ROYER, Thierry, 63040 CLERMONT-FERRAND Cedex 9 (FR); LAGARDE, Patricia, 63040 CLERMONT-FERRAND Cedex 9 (FR)
(74) Mandataire: M.F.P. Michelin
(86) Numéro de dépôt international: PCT/FR2019/053107
(87) Numéro de publication internationale: WO 2020/128291

(56) Documents cités:
- EP-A2- 0 931 676
- WO-A1-02/090135
- FR-A1- 2 950 838
- US-A- 4 779 658
- US-A- 5 280 817
- US-A1- 2012 067 494

## Description

La présente invention concerne un pneumatique radial sans chambre à air, destiné à équiper un véhicule lourd de type génie civil et, plus particulièrement, les couches élastomériques intérieures étanches au gaz de gonflage de ces pneumatiques.

Un pneumatique radial pour véhicule lourd de type génie civil est destiné à être monté sur une jante dont le diamètre est au moins égal à 25 pouces, selon la norme de la European Tyre and Rim Technical Organisation ou ETRTO. Il équipe usuellement un véhicule lourd, destiné à porter des charges élevées et à rouler sur des sols agressifs, tels que des pistes recouvertes de pierres.

De façon générale, un pneumatique ayant une géométrie de révolution par rapport à un axe de rotation, sa géométrie est décrite dans un plan méridien contenant son axe de rotation. Pour un plan méridien donné, les directions radiale, axiale et circonférentielle désignent respectivement les directions perpendiculaire à l'axe de rotation, parallèle à l'axe de rotation et perpendiculaire au plan méridien.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

On appelle extrémité haute d'un composant du pneumatique, l'extrémité radialement extérieure dudit composant. Inversement, on appelle extrémité basse, l'extrémité radialement intérieure dudit composant.

Par mélange élastomérique, on entend un matériau élastomérique obtenu par mélangeage de ses divers constituants. Un mélange élastomérique comprend classiquement une matrice élastomérique comprenant au moins un élastomère diénique de type caoutchouc naturel ou synthétique, au moins une charge renforçante de type noir de carbone et/ou de type silice, un système de réticulation le plus souvent à base de soufre, et des agents de protection.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère présent dans la composition de caoutchouc considérée et constitutive d'une couche.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche de carcasse constituée d'éléments de renforcement métalliques enrobés dans un mélange élastomérique d'enrobage. Les éléments de renforcement métalliques sont sensiblement parallèles entre eux et font, avec la direction circonférentielle, un angle compris entre 85° et 95°. La couche de carcasse comprend une partie principale, reliant les deux bourrelets entre eux et s'enroulant, dans chaque bourrelet, autour d'une tringle. La tringle comprend un élément de renforcement circonférentiel le plus souvent métallique entouré d'au moins un matériau, de manière non exhaustive, élastomérique ou textile. L'enroulement de la couche de carcasse autour de la tringle va de l'intérieur vers l'extérieur du pneumatique pour former un retournement, comprenant une extrémité. Le retournement, dans chaque bourrelet, permet l'ancrage de la couche d'armature de carcasse à la tringle du bourrelet.

Chaque bourrelet comprend un élément de remplissage prolongeant radialement vers l'extérieur la tringle. L'élément de remplissage est constitué d'au moins un mélange élastomérique de remplissage. L'élément de remplissage sépare axialement la partie principale et le retournement.

Chaque bourrelet comprend également un élément de protection prolongeant radialement vers l'intérieur le flanc et axialement extérieur au retournement. L'élément de protection est également au moins en partie en contact par sa face axialement extérieure avec le rebord de la jante. L'élément de protection est constitué d'au moins un mélange élastomérique de protection.

Chaque bourrelet comprend enfin un élément de bourrage axialement intérieur au flanc et à l'élément de protection et axialement extérieur au retournement. L'élément de bourrage est constitué d'au moins un mélange élastomérique de bourrage.

Un flanc de pneumatique comprend au moins une couche de flanc constituée par un mélange élastomérique et s'étendant axialement vers l'intérieur du pneumatique à partir d'une face extérieure du pneumatique, en contact avec l'air atmosphérique. Au moins dans la zone de plus grande largeur axiale du pneumatique, le flanc s'étend axialement vers l'intérieur jusqu'à une couche de carcasse, axialement la plus extérieure de l'armature de carcasse.

La portion du pneumatique principalement concernée par l'invention est désignée comme étant la zone épaule du pneumatique. En réalité, il s'agit de la portion du pneumatique comprise d'une part, entre la droite normale à la couche de carcasse et passant le milieu du flanc, et d'autre part, la droite normale à la couche de carcasse passant par le point situé sur la bande de roulement positionné à une distance axiale égal au 4/5 de sa largeur nominale par rapport au plan équatorial.

Les pneumatiques de génie civil à structure radiale ont une armature de carcasse qui est reliée à l'armature de sommet par une couche de mélange coussin positionnée le long de la couche de carcasse, axialement vers l'extérieur dans la zone épaule. Ce mélange coussin ci-après désigné mélange de couplage carcasse-sommet, assure le couplage de l'armature de carcasse avec l'armature de sommet. La mise en pression du pneumatique monté sur sa jante crée des tensions dans les renforts de la couche de carcasse qui à leur tour cisaillent le mélange de couplage carcasse-sommet qui va ensuite mettre en tension les renforts de l'armature de sommet. Le rôle de ce mélange de couplage est essentiel pour le bon fonctionnement du pneumatique. Un exemple d'un tel pneumatique est décrit dans le document WO/02/090135A1.

En ce qui concerne les mélanges élastomériques, un mélange élastomérique peut être caractérisé mécaniquement, en particulier après cuisson, par ses propriétés dynamiques, telles qu'un module de cisaillement dynamique G*= (G'2+G"2)1/2, où G' est le module de cisaillement élastique et G" le module de cisaillement visqueux, et une perte dynamique tgδ=G"/G'. Le module de cisaillement dynamique G* et la perte dynamique tgδ sont mesurés sur un viscoanalyseur de type Metravib VA4000, selon la norme ASTM D 5992-96. On enregistre la réponse d'un échantillon de mélange élastomérique vulcanisé, ayant la forme d'une éprouvette cylindrique de 4 mm d'épaisseur et de 400 mm² de section, soumis à une sollicitation sinusoïdale en cisaillement simple alterné, à la fréquence de 10Hz, avec un balayage en amplitude de déformation de 0,1% à 50% (cycle aller), puis de 50% à 0,1% (cycle retour), et à une température donnée, par exemple égale à 60 °C. Ces propriétés dynamiques sont ainsi mesurées pour une fréquence égale à 10 Hz, une déformation égale à 50% de l'amplitude de déformation crête-crête et une température pouvant être égale à 60°C ou 100°C.

La perte dynamique ci-dessus définie peut aussi être appréhendée par la détermination de la perte d'énergie à 60°C, qui est la différence relative de l'énergie fournie, et de l'énergie restituée d'une éprouvette du matériau à caractériser percutée par un pendule lui transmettant son énergie cinétique, ladite éprouvette étant soumise à une température de 60°C, sous une déformation de 40%, et la mesure étant effectuée à trois reprises après une accommodation de cinq chocs du pendule sur l'éprouvette.

Le coefficient de perméabilité d'un mélange permet de caractériser ses propriétés d'étanchéité ou de fuite vis à vis d'un fluide, en général gazeux. C'est la quantité de gaz transmise au travers d'une surface par unité de temps, de pression et d'épaisseur. C'est donc une grandeur qui s'exprime en Kg/s.m.Pa, selon le système international d'unités.

Les valeurs de perméabilité sont mesurées en utilisant un « testeur » de perméabilité MOCON OXTRAN 2/60 à 40°C. Des échantillons cuits sous forme de disques d'une épaisseur déterminée (approximativement 0,8 à 1 mm) sont montés sur l'appareil et rendus étanches avec de la graisse à vide. L'une des faces du disque est maintenue sous 10 psi d'azote alors que l'autre face est maintenue sous 10 psi d'oxygène. On contrôle l'augmentation de la concentration en oxygène en utilisant un détecteur à oxygène « Coulox » sur la face maintenue sous azote. On note la concentration en oxygène sur la face maintenue sous azote permettant d'atteindre une valeur constante, utilisée pour déterminer la perméabilité à l'oxygène. Une valeur arbitraire de 100 est donnée pour la perméabilité à l'oxygène du témoin, un résultat supérieur à 100 indiquant une diminution de la perméabilité à l'oxygène donc une meilleure imperméabilité.

La plupart des pneumatiques sans chambre à air, qui sont aussi connus sous la désignation "pneumatiques tubeless", destinés à être gonflés avec un gaz de gonflage, comme par exemple l'air, comportent une couche intérieure d'étanchéité constituée d'un mélange imperméable au gaz de gonflage, recouvrant la surface intérieure du pneumatique. Ce mélange est le plus souvent formé par une composition élastomérique à base de butyle.

La couche intérieure d'étanchéité recouvrant la surface interne du pneumatique sans chambre à air, permet d'éviter un dégonflage du pneumatique et de protéger les zones internes sensibles vis-à-vis des arrivées d'oxygène et d'eau. En particulier, les renforts métalliques des couches de carcasse qui peuvent s'oxyder au contact de l'air doivent être protégés de l'air interne de gonflage. Une oxydation des renforts métalliques des couches de carcasse peuvent en effet entraîner la détérioration du pneumatique.

Lors de la fabrication du pneumatique, la couche de carcasse, ainsi que les autres couches de l'ébauche de carcasse, sont posées sur un cylindre à plat au cours d'une étape dite de confection. A la fin de la confection de l'ébauche de carcasse, on procède à la conformation du pneumatique en gonflant l'ébauche cylindrique de confection pour arriver à la forme torique bien connue des pneumatiques. Lors de la phase du moulage dans le moule de la presse de vulcanisation, l'ébauche torique du pneumatique ainsi obtenue subit alors un supplément de conformation.

Les différentes transformations subies par les ébauches non vulcanisées de carcasse et de pneumatique provoquent un phénomène dit de fluage des couches intérieures de mélanges, plus particulièrement dans la région épaule du pneumatique, phénomène de fluage qui est variable circonférentiellement en amplitude et qui est un facteur important dans le manque d'endurance de l'armature de carcasse du pneumatique.

On entend par fluage, le phénomène physique qui provoque la déformation irréversible différée, c'est-à-dire non-instantanée, d'un matériau soumis à une contrainte constante, inférieure à la limite d'élasticité du matériau, pendant une durée suffisante.

En conséquence du fluage, le mélange de la couche intérieure d'étanchéité pénètre entre les renforts métalliques de la couche de carcasse notamment dans la région de l'épaule. La perforation de la couche intérieure d'étanchéité entraîne la mise à plat du pneumatique, puis sa détérioration.

Le niveau de fluage est évalué de façon visuelle selon une échelle allant de 0 à 3. Le niveau 0 correspond à l'absence de fluage, le niveau 1 correspond à un fluage où le mélange de la couche intérieure d'étanchéité a pénétré d'une profondeur correspondant à la moitié du diamètre d'un renfort de la couche de carcasse, pour le niveau 2 la profondeur de pénétration est égale au diamètre du renfort, et enfin pour le niveau 3 la profondeur de pénétration va au-delà du diamètre du renfort de la couche de carcasse.

Une solution connue pour résoudre de tels problèmes consiste à augmenter fortement l'épaisseur de la couche intérieure d'étanchéité, mais une telle solution n'est pas optimale tant du point de vue des propriétés thermiques du pneumatique que de celui du coût de fabrication. Le mélange de la couche intérieure d'étanchéité a, en général, une composition élastomérique avec du butyle, ce qui conduit à une forte hystérèse et à un coût matière relativement élevé.

Une autre difficulté rencontrée dans la zone épaule est la thermo-oxydation du mélange d'enrobage de la couche de carcasse. Bien que le mélange de la couche intérieure d'étanchéité soit étanche, il existe tout de même une faible quantité d'oxygène qui le traverse pour pénétrer dans le mélange d'enrobage de la couche de carcasse. Soumis à la température de l'air interne qui, dans un pneumatique de génie civil en roulage, peut atteindre environ 90°C, l'oxygène présent dans le mélange d'enrobage de la couche de carcasse est à l'origine de réactions de thermo-oxydation néfastes pour l'endurance du pneumatique.

En effet, l'oxydation du mélange d'enrobage de la couche de carcasse est accélérée par une température relativement élevée. Ce phénomène occasionne le vieillissement prématuré de ce mélange le fragilisant ainsi par rapport à la fissuration.

Les inventeurs se sont ainsi donnés pour objectif d'améliorer l'endurance thermique d'un pneumatique pour un véhicule de génie civil, en ralentissant l'évolution thermo-oxydante du mélange d'enrobage de la couche de carcasse.

Cet objectif a été atteint par un pneumatique pour véhicule lourd de type génie civil comprenant un sommet relié à deux flancs prolongés par deux bourrelets, l'ensemble délimitant une cavité intérieure destinée à être gonflée par un gaz, et comprenant, à partir de la cavité intérieure :
- une couche intérieure d'étanchéité constituant la paroi de la cavité intérieure, destinée à entrer en contact avec un gaz de gonflage, ayant une épaisseur E1 et constituée par un mélange élastomérique M1 ;
- une couche anti-fluage, extérieure à la couche d'étanchéité, ayant une épaisseur E2 et constituée par un mélange élastomérique M2 ayant une perte viscoélastique P60 mesurée à 60°C ;
- une couche de carcasse, extérieure à la couche anti-fluage, constituée, de l'intérieur vers l'extérieur, par une couche intérieure d'enrobage de carcasse, en contact avec la couche anti-fluage et ayant une épaisseur E3, une couche de renforts métalliques et une couche extérieure d'enrobage de carcasse, les couches intérieure et extérieure d'enrobage de carcasse étant constituées par un mélange élastomérique M3 ;
- les épaisseurs E1, E2 et E3 étant mesurées dans une zone d'épaule assurant la transition entre le sommet et chaque flanc du pneumatique,
- la couche intérieure d'étanchéité a une épaisseur E1 en millimètre comprise dans l'intervalle [2 ; 4] ;
- la somme E2+E3 des épaisseurs respectives E2 de la couche anti-fluage et E3 de la couche intérieure d'enrobage de carcasse est au moins égale à 6 mm ;
- le rapport E1/E2 entre l'épaisseur E1 de la couche intérieure d'étanchéité et l'épaisseur E2 de la couche anti-fluage est au plus égal à 0.60 ;
- la perte viscoélastique P60 du mélange élastomérique M2 de la couche anti-fluage est au plus égale à 20%; la perte viscoélastique P60 étant la différence relative de l'énergie fournie, et de l'énergie restituée d'une éprouvette du matériau à caractériser percutée par un pendule lui transmettant son énergie cinétique, ladite éprouvette étant soumise à une température de 60°C, sous une déformation de 40%, et la mesure étant effectuée à trois reprises après une accommodation de cinq chocs du pendule sur l'éprouvette.

L'idée principale de l'invention consiste à diminuer la température de fonctionnement du pneumatique, notamment dans la zone épaule, en limitant l'épaisseur de la couche intérieure d'étanchéité à une très faible épaisseur pour assurer l'étanchéité, et en optimisant l'hystérèse d'une couche anti-fluage intercalée entre la couche de carcasse et la couche intérieure d'étanchéité. La couche anti-fluage est constituée du mélange M2 à faible hystérèse, et a une épaisseur suffisante pour éviter le fluage dans les renforts de la couche de carcasse.

La faible hystérèse du mélange M2 entraîne une baisse de température sur la surface intérieure du mélange de la couche intérieure d'étanchéité en contact avec l'air interne de gonflage. Cette baisse de température à la surface du mélange M1 entraîne à son tour une amélioration de la perméabilité de ce mélange qui diminue donc le flux d'oxygène vers la masse du pneumatique. Par ailleurs dans certaines réalisations de l'invention, l'ajout de sels thiosulfate dans la composition du mélange M2 agit contre son vieillissement et donc améliore la pérennité de la solution.

Avec l'introduction de la couche anti-fluage, la diffusion de l'oxygène jusqu'au mélange d'enrobage de la couche de carcasse n'est pas bloquée, elle est seulement limitée pour être compatible avec l'utilisation du pneumatique en toute sécurité.

La solution pour éviter les problèmes d'oxydation dans le mélange d'enrobage de la couche de carcasse se résume à piéger chimiquement l'oxygène par thermo-oxydation accélérée d'une composition élastomérique servant de tampon, disposée entre la couche de carcasse et la couche intérieure d'étanchéité.

Selon l'invention, la couche intérieure d'étanchéité a une épaisseur E1 en millimètre comprise dans l'intervalle [2 ; 4].

Sur le périmètre dimensionnel considéré, les inventeurs ont établi que l'épaisseur de la couche intérieure d'étanchéité comprise dans l'intervalle en millimètre de [2; 4] garantit un fonctionnement correct de l'invention, sans perte de pression préjudiciable pour l'endurance du pneumatique.

Encore selon l'invention, la somme E2+E3 des épaisseurs respectives E2 de la couche anti-fluage et E3 de la couche intérieure d'enrobage de carcasse est au moins égale à 6 mm.

Lors de la fabrication du pneumatique, les efforts dus à la conformation du bandage conduit à des contraintes élevées dans les couches axialement et radialement intérieures à l'armature de carcasse. En l'absence de la couche anti-fluage, le mélange d'enrobage de la couche de carcasse commence par fluer entre les renforts, puis si les efforts de conformation sont suffisamment élevés, la couche intérieure d'étanchéité finit à son tour par fluer toujours entre les renforts de la couche de carcasse.

L'évaluation de l'épaisseur de la couche anti-fluage dépend du procédé de conformation. Les inventeurs ont trouvé que la somme E2+E3 des épaisseurs respectives E2 de la couche anti-fluage et E3 de la couche intérieure d'enrobage de carcasse est au moins égale à 6 mm.

Encore selon l'invention, le rapport de l'épaisseur de la couche intérieure d'étanchéité E1, sur l'épaisseur de la couche anti-fluage E2, E1/E2, est au plus égal à 0.6.

Il s'agit d'avoir ici, une couche intérieure d'étanchéité d'une épaisseur E1, limitée au juste nécessaire pour diminuer la diffusion de l'oxygène vers la masse du pneumatique. Une épaisseur de la couche intérieure d'étanchéité égale à la moitié de l'épaisseur de la couche anti-fluage suffit à garantir une étanchéité du pneumatique compatible pour son utilisation en toute sécurité, d'après les inventeurs.

D'après l'invention, la perte viscoélastique P60 du mélange élastomérique M2 de la couche anti-fluage est au plus égale à 20%.

Lors du roulage d'un pneumatique de génie civil, une partie de l'énergie fournie pour entretenir le mouvement du véhicule est dissipée sous forme de chaleur. Pour les pneumatiques sans la couche anti-fluage, la masse d'air, ou plus généralement la masse du gaz interne de gonflage qui est en contact avec la couche intérieure d'étanchéité voit sa température s'équilibrer avec celle du mélange. Typiquement, sur un pneumatique de dimension, 59/80R63, à une vitesse de 28 km/h, la température du gaz interne dans le cas d'un gonflage à l'air atteint un niveau 80°C à 90°C.

L'hystérèse du mélange de la couche anti-fluage doit diminuer significativement avec une valeur à viser de la perte à 60°C inférieure ou égale à 20%. L'objectif étant d'obtenir une baisse de température autour de 5°C dans la zone épaule pour observer un bon fonctionnement de l'invention.

La composition du mélange M2 de la couche anti-fluage doit répondre donc à plusieurs exigences : quand le gaz de gonflage est de l'air, le mélange M2 doit avoir des propriétés pour retarder la diffusion de l'oxygène en le piégeant dans cette couche, ledit mélange doit aussi protéger la couche intérieure d'étanchéité des fissures provenant d'agressions extérieures avec une épaisseur appropriée et des propriétés de résistance à la fissuration, enfin ledit mélange M2 doit avoir une faible hystérèse pour diminuer la température de l'air interne de la cavité.

Il est avantageux que le module de cisaillement visqueux G" du mélange M2 de la couche anti-fluage soit inférieur ou égal à 0.15 MPa.

Dans la zone étudiée, le pneumatique travaille à déformations imposées. La dissipation est donc directement liée au module de cisaillement visqueux du mélange M2. Les inventeurs ont établi une double condition sur la perte à 60°C, et sur le module de cisaillement visqueux qui doit être inférieur à 0.15 MPa pour les mélanges éligibles au poste anti-fluage afin de garantir un fonctionnement pérenne de l'invention.

Selon un premier mode réalisation de l'invention, le mélange élastomérique M2 de la couche anti-fluage a une composition de caoutchouc à base d'une matrice d'au moins un coupage de polyisoprène de caoutchouc naturel ou de synthèse, de polybutadiène, d'un système de réticulation, et d'une charge renforçante à un taux global au plus égal à 45 pce, et comprenant majoritairement de la silice à un taux au moins égal à 20 pce, et au plus égal à 45 pce.

La base élastomérique du mélange M2 est un coupage de polyisoprène de caoutchouc naturel, ou de polyisopène de synthèse et de polybutadiène, qui répond au besoin de résistance aux agressions d'abrasion. Des additifs antioxydants sont ajoutés pour le protéger du vieillissement sous l'action de l'oxygène de l'air de gonflage. Le gain en hystérèse est obtenu par la charge en silice majoritairement avec un taux compris entre 20 pce et 45 pce.

Selon un deuxième mode de réalisation de l'invention, le mélange élastomérique M2 de la couche anti-fluage a une composition de caoutchouc à base d'une matrice de polyisoprène de caoutchouc naturel, ou de synthèse, d'un système de réticulation, et d'une charge renforçante, à un taux global au plus égal à 45 pce, et comprenant majoritairement du noir de carbone à un taux au moins égal à 20 pce et au plus égal à 45 pce.

Dans ce mode de réalisation de l'invention, l'élastomère de base de la composition est constitué de caoutchouc naturel à 100%. Les charges renforçantes sont principalement du carbone avec un taux allant de 20 pce à 45 pce, pour améliorer la résistance mécanique et la résistance à l'abrasion.

Selon un troisième mode de réalisation préférée de l'invention, le mélange M2 de la couche anti-fluage a une composition de caoutchouc à base d'une matrice de polyisoprène de caoutchouc naturel, ou de synthèse, d'un système de réticulation, et d'une charge renforçante, à un taux global au plus égal à 45 pce, et comprenant majoritairement de la silice à un taux au moins égal à 20 pce et au plus égal à 45 pce.

Dans ce troisième mode de réalisation préférée de l'invention, l'élastomère de base de la composition est toujours du caoutchouc naturel à 100%, mais cette fois-ci, renforcé avec de la silice majoritairement. L'accent est mis ici sur la baisse de l'hystérèse, obtenue avec la charge en silice.

Avantageusement, le mélange M2 de la couche anti-fluage a une composition comprenant un sel de thiosulfate, l'hexaméthylène 1,6-bisthiosulfate de sodium (HTSNa) en proportion de 0.5 pce à 2 pce.

La présence du sel de thiosulfate, l'hexaméthylène 1,6-bisthiosulfate de sodium, agit bénéfiquement contre la réversion lors de la phase cuisson du pneumatique. De ce fait, les propriétés mécaniques et hystérétiques du mélange anti-fluage perdurent sans la dégradation liée au passage en réversion. En outre, durant l'utilisation du pneumatique qui fonctionne avec un environnement thermique élevé, la présence de ce sel de thiosulfate dans la composition du mélange garantit la pérennité de ces propriétés mécaniques et hystérétiques. En outre, les sels de thiosulfate sont relativement peu onéreux et relativement neutres vis-à-vis de l'environnement.

Il est avantageux que le mélange des flancs du pneumatique ait la même composition que le mélange anti-fluage M2 quand sa composition est à base d'une matrice d'au moins un coupage de polyisoprène de caoutchouc naturel ou de synthèse, de polybutadiène, d'un système de réticulation, et d'une charge renforçante à un taux global au plus égal à 45 pce, et comprenant majoritairement de la silice à un taux au moins égal à 20 pce, et au plus égal à 45 pce.

Bien que le mélange de la couche anti-fluage soit positionnée à l'intérieur du pneumatique, les attendues de performances sont proches de celles des flancs en contact avec l'environnement extérieur. Pour une optimisation du coût de fabrication du pneumatique en limitant le nombre de matériaux utilisés, la même composition peut être utilisée pour ces deux postes. Les flancs contribuent pour environ 15% de la dissipation viscoléastique du pneumatique et donc une composition de faible hystérèse participe à l'amélioration de l'endurance du pneumatique. Par ailleurs, les attendues relatives aux résistances aux agressions mécaniques, à l'abrasion et à l'oxydation conduisent à choisir des élastomères à base de NR et de BR fortement chargés, conformément aux choix opérés ici.

Selon un mode de réalisation l'invention telle que définie à la revendication 5, le mélange élastomérique de la couche coussin a la même composition que le mélange anti-fluage M2.

La couche coussin est positionnée le long de la couche de carcasse, axialement vers l'extérieur, dans la zone épaule. Elle est constituée d'un mélange qui assure le couplage de l'armature de carcasse à l'armature de sommet par cisaillement. La couche coussin est en contact sur sa face axialement intérieure avec la couche de carcasse, et sur sa face axialement extérieure avec les couches composites du sommet.

Dans cette configuration, le mélange anti-fluage M2 a une composition de caoutchouc à base d'une matrice de polyisoprène de caoutchouc naturel ou de synthèse, d'un système de réticulation, et d'une charge renforçante à un taux global au plus égal à 45 pce, et comprenant majoritairement de la silice à un taux au moins égal à 20 pce, et au plus égal à 45 pce.

La composition du mélange telle que définie ci-dessus, représente un bon compromis entre la cohésion et l'hystérèse. Il est donc résistant à la fissuration. Son niveau en hystérèse est relativement faible avec une perte viscoélastique P60 à 12%. L'absence de plastifiant dans sa composition évite les problèmes de migration d'huile vers les couches sommet composites quand ce mélange est utilisé dans le poste couplage carcasse-sommet.

Selon un autre mode de réalisation de l'invention, le mélange élastomérique de l'élément de bourrage a la même composition que le mélange anti-fluage M2.

Chaque bourrelet comprend un élément de bourrage axialement intérieur au flanc et à l'élément de protection et axialement extérieur au retournement de la couche de carcasse qui comprend des renforts métalliques enrobés dans un mélange élastomérique. L'élément de bourrage est donc en contact avec le mélange d'enrobage des renforts métalliques de la couche de carcasse.

Dans ce mode de réalisation, deux compositions sont possibles pour le mélange M2. Dans le premier cas, le mélange M2 de la couche anti-fluage a une composition de caoutchouc à base d'une matrice d'au moins un coupage de polyisoprène de caoutchouc naturel, ou de polyisoprène de synthèse, de polybutadiène, d'un système de réticulation, et d'une charge renforçante à un taux global au plus égal à 45 pce, et comprenant majoritairement de la silice à un taux au moins égal à 20 pce, et au plus égal à 45 pce. La perte viscoélastique à 60°C est à 12 %.

Avec la composition du mélange ci-dessus citée, on retrouve un bon compris sur l'hystérèse et la cohésion et donc sur la résistance à la fissuration. Par ailleurs, quand ce mélange est utilisé en poste de bourrage du bourrelet, il est en contact avec le retournement de la couche de carcasse sur la face axialement intérieure. Plus précisément, le contact s'établit avec le mélange d'enrobage de la couche de carcasse comme lors d'une utilisation en poste anti-fluage à l'épaule. La qualité de l'adhésion et donc la tenue de l'interface est favorisée. Enfin, dans la zone qui subit de fortes charges, les propriétés d'allongement de ce mélange participent à une bonne endurance du bourrelet. Sous une contrainte à 100% de déformation, de 1.5 MPa, l'allongement du mélange peut atteindre 15%.

Toujours dans ce même mode de réalisation, la deuxième composition possible pour le mélange M2 de la couche anti-fluage est d'avoir une composition de caoutchouc à base d'une matrice de polyisoprène de caoutchouc naturel, ou de polyisoprène de synthèse, d'un système de réticulation, et d'une charge renforçante, à un taux global au plus égal à 45 pce, et comprenant majoritairement du noir de carbone à un taux au moins égal à 20 pce et au plus égal à 45 pce. La perte viscoélastique à 60°C est à 13.5

Pour les mêmes raisons que celles vues précédemment au paragraphe [0069], le mélange M2 dotée de la composition du paragraphe [0070] est également éligible à un usage en poste de bourrage bourrelet du pneumatique.

Selon un mode de réalisation de l'invention, une troisième couche de mélange, ci-après désignée couche de liaison interne, est intercalée entre la couche intérieure d'étanchéité et la couche anti-fluage.

Pour certaines dimensions pneumatiques, le vieillissement prématuré du mélange de la couche anti-fluage se traduit par des amorces de fissures qui se propagent dans le mélange d'enrobage de la couche de carcasse. Dans ces cas, il devient donc nécessaire d'ajouter une couche de mélange de liaison interne supplémentaire entre la couche intérieure d'étanchéité et la couche anti-fluage. Le mélange de la couche de liaison interne est composé d'éléments pour réagir avec l'oxygène transmis au travers de la couche intérieure d'étanchéité. L'oxygène ainsi piégé dans la couche de liaison interne arrive en faible quantité dans la couche anti-fluage qui voit son vieillissement atténué, et donc son endurance améliorée.

Selon un autre mode de réalisation de l'invention, la couche de liaison interne, intercalé entre la couche intérieure d'étanchéité et la couche anti-fluage et a une épaisseur égale à 25 % de l'épaisseur de la couche intérieure d'étanchéité.

Dans cette configuration de l'invention, deux barrières de mélanges sont introduites: la couche de liaison interne, et la couche anti-fluage protègent l'armature de carcasse de l'oxygène transmis au travers de la couche intérieure d'étanchéité. L'épaisseur totale de cette double couche de protection, mesurée selon la droite normale à la couche de carcasse dans la zone épaule du pneumatique peut atteindre jusqu'au double de l'épaisseur de la couche intérieure d'étanchéité.

Les caractéristiques de l'invention seront mieux comprises à l'aide de la description de des figures annexées 1 et 2, non à l'échelle pour une présentation simplifiée.

[Fig.1] la figure 1 représente une vue schématique en coupe dans un plan méridien d'un pneumatique pour véhicule lourd de type génie civil selon l'invention.

La figure 2 est un agrandissement dans la zone épaule du positionnement de la couche de carcasse, de la couche anti-fluage ainsi que la couche intérieure d'étanchéité.

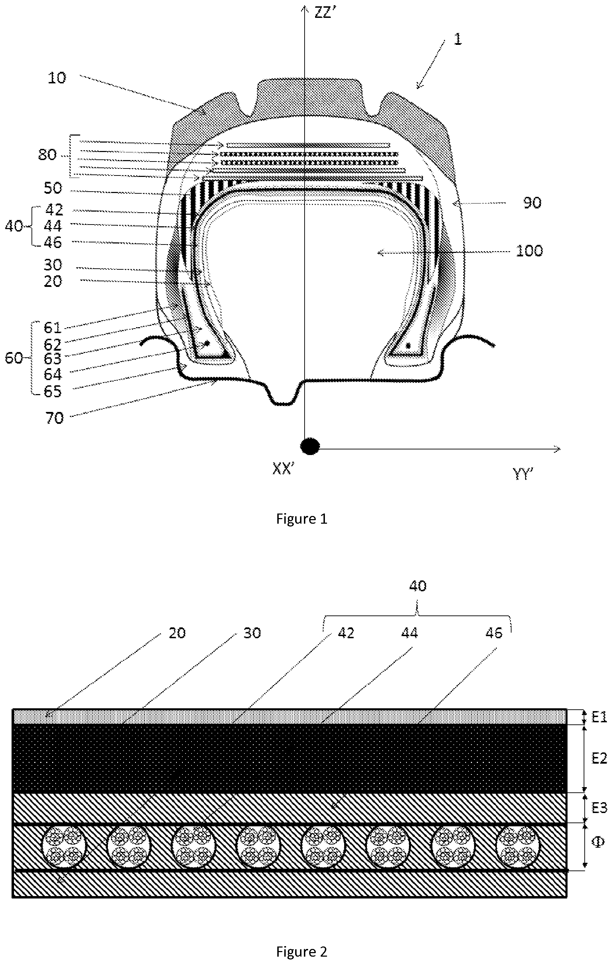

Sur la figure 1, on peut voir dans un plan méridien d'un pneumatique 1 de l'invention : Un sommet 80 relié à deux flancs 90 prolongés par deux bourrelets 60, l'ensemble délimitant une cavité intérieure 100 destinée à être gonflée par un gaz, et comprenant, à partir de la cavité intérieure :
- une couche intérieure d'étanchéité 20 constituant la paroi de la cavité intérieure 100, destinée à entrer en contact avec un gaz de gonflage, ayant une épaisseur E1 et constituée par un mélange élastomérique M1 ;
- une couche de mélange anti-fluage 30, extérieure à la couche d'étanchéité, ayant une épaisseur E2 et constituée par un mélange élastomérique M2 ayant une perte élastique P60 mesurée à 60°C ;
- une couche de carcasse 40, extérieure à la couche de anti-fluage 30, constituée, de l'intérieur vers l'extérieur, par une couche intérieure d'enrobage de carcasse 46, en contact avec la couche anti-fluage 30 et ayant une épaisseur E3, une couche de renforts métalliques 44 et une couche extérieure d'enrobage de carcasse 42, les couches intérieure et extérieure d'enrobage de carcasse étant constituées par un mélange élastomérique M3 ;
- le bourrelet 60 comprend le retournement 62 de la couche de carcasse 40 autour de la tringle 64, un élément de remplissage 63 de la cavité formée par la partie principale de la couche de carcasse 40 et son retournement 62, un élément de protection 65 destiné à être en contact avec la jante 70 ;
- le sommet 80 du pneumatique comprend les couches de sommet, formées de renforts enrobés dans un mélange élastomérique, et faisant chacune un angle avec une direction circonférentielle XX' ;
- l'armature de carcasse 40 est reliée à l'armature de sommet 80 par une couche de mélange coussin 50 positionnée le long de la couche de carcasse 40, axialement vers l'extérieur dans la zone épaule. Ce mélange coussin ci-après désigné mélange de couplage carcasse-sommet, assure le couplage de l'armature de carcasse 40 avec l'armature de sommet 80.
- les épaisseurs E1, E2 et E3 sont mesurées dans une zone épaule dans la direction normale à la couche de carcasse passant par le milieu de la couche coussin 50.

[Fig.2] Sur la figure 2, on peut voir la couche de carcasse 40 comprenant de l'intérieur vers l'extérieur, une couche intérieure d'enrobage de carcasse 46, en contact avec la couche anti-fluage 30 et ayant une épaisseur E3, une couche de renforts métalliques 44 et une couche extérieure d'enrobage de carcasse 42 d'épaisseur E2 et enfin la couche intérieure d'étanchéité 20 d'épaisseur E1, en contact avec l'air interne de gonflage. Le diamètre des renforts de la couche de renforts 44 est Φ.

L'invention a été plus particulièrement étudiée sur un pneumatique pour véhicule de type Dumper, de dimension 59/80 R63, telle que représentée sur la figure 1. Ce pneumatique est gonflé à 600 KPa pour une charge nominale à porter de 100 000 Kg.

Les résultats de l'invention ont été constatés sur un pneumatique réalisé suivant l'invention, comparés aux résultats de simulation obtenus sur un pneu de référence de même dimension conformément à l'état de l'art, c'est-à-dire sans la présence d'une couche anti-fluage optimisé en hystérèse.

Pour ce pneumatique, la couche de carcasse a une épaisseur moyenne de 7.8 mm, et l'épaisseur E3 du mélange d'enrobage au dos du renfort est d'environ 2.5 mm. La couche interne d'étanchéité a une épaisseur E1 de 3.5 mm. La couche anti-fluage a une épaisseur E2 de 6 mm.

Le tableau 1 qui suit donne des exemples de composition du mélange élastomérique M2 de la couche anti-fluage intercalée entre d'une part la couche de carcasse et d'autre part la couche de mélange intérieur d'étanchéité :

**[Tableau 1]**

| Composition | Mélange anti-fluage Témoin | Mélange anti-fluage | Mélange anti-fluage | Mélange anti-fluage | Mélange anti-fluage |
|---|---|---|---|---|---|
| Elastomère NR | 50 | 50 | 100 | 100 | 100 |
| Elastomère BR | 50 | 50 | 0 | 0 | 0 |
| Noir de carbone N330 | 50 | 0 | 35 | 2 | 2 |
| Noir de carbone N234 | 0 | 3 | 0 | 0 | 0 |
| Silice | 0 | 29.5 | 0 | 35 | 35 |
| Plastifiant | 18 | 10 | 0 | 0 | 0 |
| Cire | 1 | 1 | 0 | 0 | 0 |
| Antioxydant | 3 | 3 | 1.50 | 2 | 2 |
| Oxyde de Zinc | 2.4 | 2.95 | 5.00 | 5 | 5 |
| Acide stéarique | 1 | 1 | 1.5 | 1 | 1 |
| Soufre | 1.3 | 1.04 | 1.60 | 1.75 | 1.75 |
| Accélérateur | 0.6 | 0.8 | 0.60 | 0.9 | 0.9 |
| Silane | 0 | 2.95 | 0 | 2 | 2 |
| PEG 4000 | 0 | 0 | 0 | 2.5 | 2.5 |
| DPG | 0 | 0.55 | 0 | 0.3 | 0.3 |
| HTSNa | 0 | 0 | 2 | 2 | 0 |

Le mélange témoin de la couche anti-fluage a une composition de caoutchouc à base d'une matrice d'un coupage de polyisoprène de caoutchouc naturel à 50 pce, de polybutadiène à 50 pce, d'un système de réticulation, et d'une charge renforçante à un taux global égal de 50 pce comprenant uniquement du noir de carbone N330.

Le mélange A a la même matrice que le mélange témoin, mais avec une charge renforçante comprenant du noir de carbone N234 à 3 pce et de la silice à 29.5 pce.

Le mélange B a une composition de caoutchouc à base d'une matrice de polyisoprène de caoutchouc naturel à 100 pce, d'un système de réticulation, et d'une charge renforçante de noir de carbone N330 à un taux global égal à 35 pce.

Le mélange C a une composition de caoutchouc à base d'une matrice de polyisoprène de caoutchouc naturel à 100 pce, d'un système de réticulation, et d'une charge renforçante comprenant du noir de carbone N330 à 2 pce et de la silice à 35 pce.

Le mélange D est égal au mélange C mais sans le sel de thiosulfate. La comparaison entre C et D permet de tester l'effet du sel de thiosulfate.

En résumé, pour la composition du mélange anti-fluage, ont été testés : un effet de matrice entre un coupage de caoutchouc naturel et de polybutadiène versus une matrice uniquement en caoutchouc naturel, un effet de charge renforçante entre du noir de carbone ou de la silice, et enfin un effet de sels thiosulfate.

Pour le pneumatique de l'invention, les caractérisations des mélanges testés pour la couche anti-fluage sont regroupées dans le tableau 2 suivant:

**[Tableau 2]**

| Résultats | Mélange anti-fluage Témoin | Mélange anti-fluage A | Mélange anti-fluage B | Mélange anti-fluage C | Mélange anti-fluage D |
|---|---|---|---|---|---|
| **Propriétés mécaniques après cuisson** | | | | | |
| MA100 (MPa) | 1.1 | 0.9 | 1.6 | 1.6 | 1.3 |
| MA300(MPa) | 0.9 | 0.6 | 1.5 | 1.2 | 1.1 |
| Contrainte Rupture (MPa) | 720 | 770 | 660 | 650 | 682 |
| Allongement rupture (%) | 11 | 9 | 15 | 15 | 15 |

| **Hystérèse après cuisson** | | | | | |
|---|---|---|---|---|---|
| P60 (%) | 27 | 12 | 15 | 12 | 13 |
| **G"(MPa)** | 0.2 | 0.1 | 0.08 | 0.06 | 0.06 |

| **Vieillissement** : **étuvage (240 heures à 110°C AZOTE)** | | | | | |
|---|---|---|---|---|---|
| MA100 (MPa) | NC | NC | 1.4 | 1.2 | 1.1 |
| MA300(MPa) | NC | NC | 1.3 | 1 | 1 |
| P60 (%) | NC | NC | 17 | 15 | 17.5 |

Le mélange anti-fluage C est la composition qui minimise le mieux l'hystérèse avec une perte à 60°C, P60 égale à 12%, et un module de cisaillement visqueux de 0.06 MPa.

L'effet des sels thiosulfate se lit sur les résultats des mélanges C et D. Pour le mélange C, la perte hystérétique varie de 12% à 15 % respectivement avant et après vieillissement. Autrement dit, l'hystérèse se dégrade de 25% avec le vieillissement en présence de sels thiosulfate. Pour le mélange D, sans sel thiosulfate, la dégradation de l'hystérèse est d'environ 35% pour le même vieillissement.

Pour le pneumatique de l'invention, le mélange anti-fluage C a été utilisé, et sur le pneumatique de référence, le mélange anti-fluage témoin. Les résultats obtenus sont la température moyenne de fonctionnement du pneumatique dans la zone épaule, la température moyenne de l'air interne dans la cavité de gonflage, le coefficient de perméabilité du mélange de la couche intérieure d'étanchéité, résumés dans le tableau 3 suivant :

**[Tableau 3]**

| Composition | Température Moyenne à l'épaule | Température Moyenne air interne | Coefficient de Perméabilité |
|---|---|---|---|
| Témoin | 100 | 100 | 100 |
| Pneu de l'invention | 103 | 105 | 120 à 140 |

La baisse de l'hystérèse du mélange de la couche anti-fluage du pneumatique de l'invention a entraîné une baisse de 3% de la température moyenne de fonctionnement du pneumatique à l'épaule. La température de l'air interne dans la cavité a, quant à elle, baissé de 5%.

On observe une amélioration du coefficient de perméabilité du mélange de la couche intérieure d'étanchéité de 20% à 40%.

L'amélioration de la perméabilité de la couche intérieure d'étanchéité est corrélée avec la baisse de température de l'air interne. La perméabilité est reliée à la température par une loi de type Arrhenius qui exprime la décroissance exponentielle de la perméabilité quand la température croit. C'est ainsi qu'une diminution de 5°C de la température à la surface de la couche intérieure d'étanchéité, améliore la perméabilité du mélange d'au moins 20%.

L'absence de fluage de la couche intérieure d'étanchéité a été observée sur toutes les solutions pneumatiques dotées d'une couche de mélange anti-fluage quelle que soit la composition du mélange M2.

## Revendications

1. Pneumatique (1) pour véhicule de Génie Civil comprenant un sommet (80) relié à deux flancs (90) prolongés par deux bourrelets (60), l'ensemble délimitant une cavité intérieure (100) destinée à être gonflée par un gaz, et comprenant, à partir de la cavité intérieure :
- une couche intérieure d'étanchéité (20) constituant la paroi de la cavité intérieure, destinée à entrer en contact avec un gaz de gonflage, ayant une épaisseur E1 et constituée par un mélange élastomérique M1 ;
- une couche anti-fluage (30), extérieure à la couche intérieure d'étanchéité, ayant une épaisseur E2 et constituée par un mélange élastomérique M2 ayant une perte viscoélastique P60 mesurée à 60°C ;
- une couche de carcasse (40), extérieure à la couche anti-fluage (30), constituée, de l'intérieur vers l'extérieur, par une couche intérieure d'enrobage de carcasse (46), en contact avec la couche anti-fluage (30) et ayant une épaisseur E3, une couche de renforts métalliques (44) et une couche extérieure d'enrobage de carcasse (42), les couches intérieure et extérieure d'enrobage de carcasse étant constituées par un mélange élastomérique M3 ;
- les épaisseurs E1, E2 et E3 étant mesurées dans une zone d'épaule assurant la transition entre le sommet et chaque flanc du pneumatique,
**caractérisé en ce que** la couche intérieure d'étanchéité (20) a une épaisseur E1 en millimètre comprise dans l'intervalle [2 ;4], **en ce que** la somme E2+E3 des épaisseurs respectives E2 de la couche anti-fluage (30) et E3 de la couche intérieure d'enrobage de carcasse (46) est au moins égale à 6 mm, **en ce que** le rapport E1/E2 entre l'épaisseur E1 de la couche intérieure d'étanchéité (20) et l'épaisseur E2 de la couche anti-fluage (30) est au plus égal à 0.60 et **en ce que** la perte viscoélastique P60 du mélange élastomérique M2 de la couche anti-fluage (30) est au plus égale à 20% ; la perte viscoélastique P60 étant la différence relative de l'énergie fournie, et de l'énergie restituée d'une éprouvette du matériau à caractériser percutée par un pendule lui transmettant son énergie cinétique, ladite éprouvette étant soumise à une température de 60°C, sous une déformation de 40%, et la mesure étant effectuée à trois reprises après une accommodation de cinq chocs du pendule sur l'éprouvette.

2. Pneumatique (1) selon la revendication 1, le mélange élastomérique M2 de la couche anti-fluage (30) ayant un module de cisaillement visqueux G", **dans lequel** le module de cisaillement visqueux G" du mélange élastomérique M2 de la couche anti-fluage (30) est au plus égal à 0.15MPa.

3. Pneumatique (1) selon l'une quelconque des revendications 1 ou 2, **dans lequel** le mélange élastomérique M2 de la couche anti-fluage (30) a une composition de caoutchouc à base d'une matrice d'au moins un coupage de polyisoprène de caoutchouc naturel ou de synthèse, de polybutadiène, d'un système de réticulation, et d'une charge renforçante à un taux global au plus égal à 45 pce, et comprenant majoritairement de la silice à un taux au moins égal à **20** pce, et au plus égal à 45 pce.

4. Pneumatique (1) selon l'une quelconque des revendications 1 ou 2, **dans lequel** le mélange élastomérique M2 de la couche anti-fluage (30) a une composition de caoutchouc à base d'une matrice de polyisoprène de caoutchouc naturel ou de synthèse, d'un système de réticulation, et d'une charge renforçante à un taux global au plus égal à 45 pce, et comprenant majoritairement du noir de carbone à un taux au moins égal à 20 pce, et au plus égal à 45 pce.

5. Pneumatique (1) selon l'une quelconque des revendications 1 ou 2, **dans lequel** le mélange élastomérique M2 de la couche anti-fluage (30) a une composition de caoutchouc à base d'une matrice de polyisoprène de caoutchouc naturel ou de synthèse, d'un système de réticulation, et d'une charge renforçante à un taux global au plus égal à 45 pce, et comprenant majoritairement de la silice à un taux au moins égal à 20 pce, et au plus égal à 45 pce.

6. Pneumatique (1) selon l'une des revendications 4 ou 5, **dans lequel** le mélange élastomérique M2 de la couche anti-fluage (30) a une composition comprenant un sel de thiosulfate, l'hexaméthylène 1,6-bisthiosulfate de sodium en proportion de 0.5 pce à 2 pce.

7. Pneumatique (1) selon la revendication 3, ayant deux flancs (90) constitués chacun d'un mélange élastomérique reliant la bande de roulement (10) au bourrelet (60), **dans lequel** le mélange des flancs (90) a la même composition que le mélange anti-fluage M2.

8. Pneumatique (1) selon la revendication 5, ayant une couche coussin (50) positionnée le long de la couche de carcasse (40), axialement vers l'extérieur, dans la zone épaule, étant constituée d'un mélange élastomérique **dans lequel** le mélange élastomérique de la couche coussin (50) a la même composition que le mélange anti-fluage M2.

9. Pneumatique (1) selon l'une des revendications 3 ou 4, chaque bourrelet (60) comprenant un élément de bourrage (61), axialement intérieur au flanc (90), et axialement extérieur au retournement (62) de la couche de carcasse (40) autour d'une tringle, l'élément de bourrage (61) étant constitué d'au moins un mélange élastomérique **dans lequel** le mélange élastomérique de l'élément de bourrage (61) a la même composition que le mélange anti-fluage M2.

10. Pneumatique (1) selon l'une des revendications 1 à 6, **dans lequel** une couche de liaison constituée par un mélange élastomérique M4 est intercalée entre la couche intérieure d'étanchéité (20) et la couche anti-fluage (30).

11. Pneumatique (1) selon la revendication 7, **dans lequel,** la couche de liaison a une épaisseur E4 égale à 25 % de l'épaisseur E1 de la couche intérieure d'étanchéité (20).

## Patentansprüche

1. Reifen (1) für ein Baufahrzeug, umfassend einen Gürtel (80), der mit zwei Flanken (90) verbunden ist, die durch zwei Wülste (60) verlängert werden, wobei die Einheit einen inneren Hohlraum (100) begrenzt, der dazu bestimmt ist, mit einem Gas aufgepumpt zu werden, und umfassend, von dem inneren Hohlraum aus:
- eine innere Dichtungslage (20), die die Wand des inneren Hohlraums bildet und dazu bestimmt ist, mit einem Aufpumpgas in Kontakt zu gelangen, eine Dicke E1 aufweist und aus einer Elastomermischung M1 besteht;
- eine Anti-Kriech-Lage (30), außerhalb der inneren Dichtungslage, die eine Dicke E2 aufweist und aus einer Elastomermischung M2 besteht, die einen bei 60 °C gemessenen viskoelastischen Verlust P60 aufweist;
- eine Karkassenlage (40), außerhalb der Anti-Kriech-Lage (30), die von innen nach außen aus einer inneren Karkasseneinbettungslage (46), die in Kontakt mit der Anti-Kriech-Lage (30) ist und eine Dicke E3 aufweist, einer Lage aus metallischen Festigkeitsträgern (44) und einer äußeren Karkasseneinbettungslage (42) besteht, wobei die inneren und äußeren Karkasseneinbettungslagen aus einer Elastomermischung M3 bestehen;
- wobei die Dicken E1, E2 und E3 in einem Schulterbereich gemessen werden, der den Übergang zwischen dem Gürtel und jeder Flanke des Reifens gewährleistet,
**dadurch gekennzeichnet, dass** die innere Dichtungslage (20) eine Dicke E1 in Millimetern aufweist, die in dem Intervall [2 ;4] inbegriffen ist, dass die Summe E2+E3 der jeweiligen Dicken E2 der Anti-Kriech-Lage (30) und E3 der inneren Karkasseneinbettungslage (46) mindestens 6 mm beträgt, dass das Verhältnis E1/E2 zwischen der Dicke E1 der inneren Dichtungslage (20) und der Dicke E2 der Anti-Kriech-Lage (30) höchstens 0,60 beträgt und dass der viskoelastische Verlust P60 der Elastomermischung M2 der Anti-Kriech-Lage (30) höchstens 20 % beträgt; wobei der viskoelastische Verlust P60 die relative Differenz der zugeführten Energie und der wieder abgegebenen Energie einer Probe des zu charakterisierenden Materials ist, auf die ein Pendel prallt, das seine kinetische Energie an sie überträgt, wobei die Probe einer Temperatur von 60 °C ausgesetzt ist, unter einer Verformung von 40 %, und wobei die Messung mit drei Wiederholungen nach einer Akkomodation von fünf Schlägen des Pendels auf die Probe durchgeführt wird.

2. Reifen (1) nach Anspruch 1, wobei die Elastomermischung M2 der Anti-Kriech-Lage (30) einen viskosen Schermodul G" aufweist, wobei der viskose Schermodul G" der Elastomermischung M2 der Anti-Kriech-Lage (30) höchstens 0,15 MPa beträgt.

3. Reifen (1) nach einem der Ansprüche 1 oder 2, bei dem die Elastomermischung M2 der Anti-Kriech-Lage (30) eine Kautschukzusammensetzung auf Basis einer Matrix aus mindestens einem Verschnitt von Polyisopren von Natur- oder Synthesekautschuk, von Polybutadien, einem Vernetzungssystem und einem verstärkenden Füllstoff mit einem Gesamtanteil von höchstens 45 phe und mehrheitlich Kieselsäure mit einem Anteil von mindestens 20 phe und höchstens 45 phe umfassend aufweist.

4. Reifen (1) nach einem der Ansprüche 1 oder 2, bei dem die Elastomermischung M2 der Anti-Kriech-Lage (30) eine Kautschukzusammensetzung auf Basis einer Matrix aus Polyisopren von Natur- oder Synthesekautschuk, einem Vernetzungssystem und einem verstärkenden Füllstoff mit einem Gesamtanteil von höchstens 45 phe und mehrheitlich Ruß mit einem Anteil von mindestens 20 phe und höchstens 45 phe umfassend aufweist.

5. Reifen (1) nach einem der Ansprüche 1 oder 2, bei dem die Elastomermischung M2 der Anti-Kriech-Lage (30) eine Kautschukzusammensetzung auf Basis einer Matrix aus Polyisopren von Natur- oder Synthesekautschuk, einem Vernetzungssystem und einem verstärkenden Füllstoff mit einem Gesamtanteil von höchstens 45 phe und mehrheitlich Kieselsäure mit einem Anteil von mindestens 20 phe und höchstens 45 phe umfassend aufweist.

6. Reifen (1) nach einem der Ansprüche 4 oder 5, bei dem die Elastomermischung M2 der Anti-Kriech-Lage (30) eine Zusammensetzung aufweist, die ein Thiosulfatsalz, das Natriumhexamethylen-1,6-bisthiosulfat, in einem Verhältnis von 0,5 phe bis 2 phe umfasst.

7. Reifen (1) nach Anspruch 3, zwei jeweils aus einer Elastomermischung bestehende Flanken (90) aufweisend, die den Laufstreifen (10) mit der Wulst (60) verbinden, wobei die Mischung der Flanken (90) die gleiche Zusammensetzung wie die Anti-Kriech-Mischung M2 aufweist.

8. Reifen (1) nach Anspruch 5, eine Kissenlage (50) aufweisend, die entlang der Karkassenlage (40), axial nach außen hin, in dem Schulterbereich positioniert ist und die aus einer Elastomermischung besteht, wobei die Elastomermischung der Kissenlage (50) die gleiche Zusammensetzung wie die Anti-Kriech-Mischung M2 aufweist.

9. Reifen (1) nach einem der Ansprüche 3 oder 4, wobei jede Wulst (60) ein Füllelement (61), axial innerhalb der Flanke (90) und axial außerhalb des Umschlags (62) der Karkassenlage (40) um einen Wulstkern, umfasst, wobei das Füllelement (61) aus mindestens einer Elastomermischung besteht, wobei die Elastomermischung des Füllelements (61) die gleiche Zusammensetzung wie die Anti-Kriech-Mischung M2 aufweist.

10. Reifen (1) nach einem der Ansprüche 1 bis 6, bei dem eine Verbindungsschicht, die aus einer Elastomermischung M4 besteht, zwischen der inneren Dichtungslage (20) und der Anti-Kriech-Lage (30) eingelegt ist.

11. Reifen (1) nach Anspruch 7, bei dem die Verbindungslage eine Dicke E4 aufweist, die 25 % der Dicke E1 der inneren Dichtungslage (20) beträgt.

## Claims

1. Tyre (1) for a civil engineering vehicle comprising a crown (80) connected to two sidewalls (90) extended by two beads (60), the assembly delimiting an inner cavity (100) intended to be inflated with a gas, and comprising, starting from the inner cavity:
- an airtight inner layer (20) forming the wall of the inner cavity, intended to come into contact with an inflation gas, having a thickness E1 and consisting of an elastomeric mixture M1;
- an anti-creep layer (30), on the outside of the airtight inner layer, having a thickness E2 and consisting of an elastomeric mixture M2 having an elastic loss P60 measured at 60°C;
- a carcass layer (40), on the outside of the anti-creep layer (30), consisting, from inside to outside, of an inner carcass coating layer (46), in contact with the anti-creep layer (30) and having a thickness E3, a layer of metal reinforcers (44) and an outer carcass coating layer (42), the inner and outer carcass coating layers consisting of an elastomeric mixture M3;
- the thicknesses E1, E2 and E3 being measured in a shoulder region forming the transition between the crown and each sidewall of the tyre,
**characterized in that** the airtight inner layer (20) has a thickness E1 in millimetres in the interval [2,4], **in that** the sum E2+E3 of the thicknesses E2 of the anti-creep layer (30) and E3 of the inner carcass coating layer (46) respectively is at least equal to 6 mm, **in that** the ratio E1:E2 between the thickness E1 of the airtight inner layer (20) and the thickness E2 of the anti-creep layer (30) is at most equal to 0.60 **and in that** the viscoelastic loss P60 of the elastomeric mixture M2 of the anti-creep layer (30) is at most equal to 20%; the viscoelastic loss P60 being the relative difference between the energy supplied and the energy returned from a test piece of the material to be characterized, struck by a pendulum, transmitting its kinetic energy to it, said test piece1 being subjected to a temperature of 60°C under a deformation of 40%, and the measurement being carried out three times after accommodation of five shocks of the pendulum on the test piece.

2. Tyre (1) according to Claim 1, the elastomeric mixture M2 of the anti-creep layer (30) having a viscous shear modulus G", **in which** the viscous shear modulus G" of the elastomeric mixture M2 of the anti-creep layer (30) is at most equal to 0.15 MPa.

3. Tyre (1) according to either one of Claims 1 and 2, **in which** the elastomeric mixture M2 of the anti-creep layer (30) has a rubber composition based on a matrix of at least one blend of polyisoprene natural or synthetic rubber, polybutadiene, a crosslinking system, and a reinforcing filler at an overall content at most equal to 45 phr, and predominantly comprising silica at a content at least equal to **20** phr, and at most equal to 45 phr.

4. Tyre (1) according to either one of Claims 1 and 2, **in which** the elastomeric mixture M2 of the anti-creep layer (30) has a rubber composition based on a matrix of polyisoprene natural or synthetic rubber, a crosslinking system, and a reinforcing filler at an overall content at most equal to 45 phr, and predominantly comprising carbon black at a content at least equal to 20 phr, and at most equal to 45 phr.

5. Tyre (1) according to either one of Claims 1 and 2, **in which** the elastomeric mixture M2 of the anti-creep layer (30) has a rubber composition based on a matrix of polyisoprene natural or synthetic rubber, a crosslinking system, and a reinforcing filler at an overall content at most equal to 45 phr, and predominantly comprising silica at a content at least equal to 20 phr, and at most equal to 45 phr.

6. Tyre (1) according to either one of Claims 4 and 5, in which the elastomeric mixture M2 of the anti-creep layer (30) has a composition comprising a thiosulphate salt, sodium hexamethylene-1,6-bisthiosulphate, in a proportion of 0.5 phr to 2 phr.

7. Tyre (1) according to Claim 3, having two sidewalls (90) each consisting of an elastomeric mixture connecting the tread (10) to the bead (60), **in which** the mixture of the sidewalls (90) has the same composition as the anti-creep mixture M2.

8. Tyre (1) according to Claim 5, having a cushion layer (50) positioned along the carcass layer (40), axially towards the outside, in the shoulder region, consisting of an elastomeric mixture **in which** the elastomeric mixture of the cushion layer (50) has the same composition as the anti-creep mixture M2.

9. Tyre (1) according to either one of Claims 3 and 4, each bead (60) comprising a filler element (61), axially on the inside of the sidewall (90), and axially on the outside of the turn-up (62) of the carcass layer (40) around a bead, the filler element (61) consisting of at least one elastomeric mixture **in which** the elastomeric mixture of the filler element (61) has the same composition as the anti-creep mixture M2.

10. Tyre (1) according to one of Claims 1 to 6, **in which** a bonding layer consisting of an elastomeric mixture M4 is interposed between the airtight inner layer (20) and the anti-creep layer (30).

11. Tyre (1) according to Claim 7, **in which** the bonding layer has a thickness E4 equal to 25% of the thickness E1 of the airtight inner layer (20).
